# EUROPÄISCHE PATENTSCHRIFT

(11) **EP 0 994 551 B1**
(45) Veröffentlichungstag und Bekanntmachung des Hinweises auf die Patenterteilung: **03.09.2008**
(21) Anmeldenummer: 99120239.1
(22) Anmeldetag: 11.10.1999
(51) Int. Cl.: H02K 3/28, H02K 3/12

(54) **Elektrische Maschine mit mehrphasiger Wicklung und Verfahren zu ihrer Herstellung**
Polyphase electric machine and its production method
Machine élèctrique polyphasée et sa fabrication

(30) Priorität: 12.10.1998 DE 19846923
(43) Veröffentlichungstag der Anmeldung: 19.04.2000
(73) Patentinhaber: VEM Sachsenwerk GmbH, 01242 Dresden (DE)
(72) Erfinder: Sabinski, Joachim, Dr.-Ing., 01169 Dresden (DE); Kuss, Hans, Prof. Dr.-Ing., 01109 Dresden (DE)
(74) Vertreter: Weissfloh, Ingo

(56) Entgegenhaltungen:
- DE-A- 3 320 805
- DE-A- 10 174 329
- DE-A1- 4 312 217
- DE-C1- 740 651
- US-A- 3 780 324
- US-A- 5 787 567

## Beschreibung

Die Erfindung betrifft eine eine mehrphasigen hyklung mit permamenfmag erregung mit hydropye elektrische Maschine mit Frequenzen größer 50 Hz, wie z.B. eine Drehfeldmaschine mit Permnes/inagnelerrage und ein Verfahren zu ihrer Herstellung mit zylindrischen oder linearen Luftspalt vorzugsweist für den Einsatz als kompakte Antriebslösung.

Aus dem Stand der Technik sind eine Vielzahl von Wickhungen für rotierende permanentmagneterregte elektrische Maschinen bekannt. In der DE-PS 34 42 033 ist eine Wicklung beschrieben, bei der pro Ständerzahn mindestens zwei sich nicht überlappende Wicklungsstränge angeordnet sind, die im wesentlichen gleich, jedoch voneinander unabhängig sind, wobei ein Ende jeder Wicklung von einem benachbarten Ende einer benachbarten Wicklung durch mindestens einen Zahn getrennt ist, der mit einer niederohmigen Kurzschlußwicklung versehen ist.

Aus dem DE-G 92 12 889.0 ist eine Lösung bekannt, wo eine Wicklungsanordnung für eine mehrphasige elektrische Maschine gekennzeichnet ist, durch die Anordnung von einer vorgegebenen Zahl von Spulen in zwei Schichten und zwar in einer Oberschicht und einer Unterschicht, wobei jede Schicht für sich allein, in den Ständernuten entsprechend einer Einschichtwicklung eingelegt ist. Dabei sind die in der Unterschicht befindlichen Unterschichtspulen mit den in der Oberschicht befindlichen Oberschichtspulen derart geschaltet und gegeneinander versetzt angeordnet, daß eine einer beliebig gesehnten Zwcischichtwicklung entsprechende Feldverteilung im Luftspalt der elektrischen Maschine bewirkt wird. Bei dieser Erfindung ist eine herkömmliche Schaltung mit einem entsprechenden Aufbau notwendig, der den Wickelkopf vergrößert. Zudem ist die Herstellung der Schaltverbindungen zwischen den Spulen relativ aufwendig.

Die zeigt eine miederpolye Maschine mit eines mehrphasigen Wicklung, die mit Spulen ungleiche-Spulenweite als eine Zweischichtwicklung ausgefüht ist. Die Spulenweik der pulen ist dabei größer eines. Sie beschreit einem Traktionsantriebe mit einer Drehstromwicklung mit übereinanden liegenden Spulen.

Der Erfindung liegt die Aufgabe zugrunde, eine Wicklung und ein Verfahren zu ihrer Herstellung für hochausgenutzte elektrische Maschinen zu schaffen, die eine kompakte Bauweise der gesamten elektrischen Maschine ermöglicht, insbesondere die Ausbildung des Wickelkopfes minimiert und gleichzeitig mechanisch, elektrisch und thermisch hochbelastbar ist.

Erfindungsgemäß wird die Aufgabe durch die Merkmale der Patentansprüche 1und 2 gelöst. Dabei ist in die Nuten des Ständers einer elektrischen Maschine eine an sich bekannte mehrphasige Wicklung eingelegt. Diese Wicklung innerhalb einer Nut wird erstmalig, wobei sie weitestgehend pro Spulengruppe durchgängig geschleift ausgebildet ist, aus isolierten oder teilweise isolierten Litzenleitern mit quadratischen oder rechteckförmigen Querschnitt gewickelt Dabei sind die Wicklungsdrähte vorzugsweise isoliert. Es erfolgt eine Direktbewicklung jedes einzelnen Zahnes des Blechpaketes in der Art und Weise, daß in der Nut zwei Spulenseiten unterschiedlicher Spulen nebeneinander oder übereinander liegen und zwischen diesen Spulenseiten vorzugsweise eine Zwischenisolierung eingefügt ist. Die Wirkung der erfindungsgemäßen Wicklung entspricht der bekannten gesehnten Zweischichtwicklung. Die Herstellung einer mehrphasigen Wicklung erfolgt so, daß die Spulen eines Stranges oder einer Spulengruppe durchgehend um einen Zahn, weiterführend um einen oder mehrere Nachbarzähne nach einer oder zwei Richtungen weiter ohne Unterbrechung durchgängig gewickelt werden und vor Beginn des Wickelvorganges um den Nachbarzahn vorzugsweise eine Zwischenisolierung in der bereits halb gefüllten Nut eingelegt ist.

Durch die erfindungsgemäße Wicklung wird es erstmals möglich :
- Maschinen mit sehr kleiner Wickelkopfausladung zu fertigen,
- eine effektive seriengerechte Fertigung hochpoliger Maschinen zu realisieren,
- eine kompakte Wicklungsausführung sehr hoher mechanischer Festigkeit, insbesondere für Maschinen mit hohen mechanischen Beanspruchungen zu erreichen,
- vergleichsweise geringe Wicklungsverluste zu erzielen,
- mit einer minimalen Anzahl von Schaltverbindungen gegenüber herkömmlichen Wicklungen auszukommen sowie
- eine verbesserte Wärmeabführung aus dem Bereich der Wickelköpfe in das Blechpaket zu erreichen.

Die Erfindung soll in einem Ausführungsbeispiel an Hand einer achtpoligen Dreiphasenwicklung in neun Nuten und der Wicklungsausführung nach Anspruch 1 näher erläutert werden. Die Strangwicklung besteht hierbei aus drei nebeneinander liegenden Spulen. Die Ausführung der Strangwicklung erfolgt vorzugsweise so, daß die mittlere Spule durch Direktbewicklung eines Zahnes manuell oder maschinell ausgeführt wird. Mit den verbleibenden beiden Enden wird der jeweils benachbarte rechte und ein linker Zahn fortlaufend direkt bewickelt, so daß eine Strangwicklung mit drei durchgehend gewickelten Spulen entsteht.

In einer speziellen Ausführungsform kann die Wicklung auch so durchgängig geschleift werden, daß die beiden Spulenseiten übereinander liegen. Die erfindungsgemäße Wicklung ist sowohl für rotierende als auch für lineare elektrische Maschinen einsetzbar.

## Patentansprüche

1. Hochpolige elektrische Maschine mit einer mehrphasigen Wicklung mit Permanentmagneterregung mit Frequenzen grösser 50 Hz,
wobei in den zu bewickelnden Nuten mehrphasige Wicklungen eingelegt sind, die pro Spulengruppe durchgängig geschleift sind,
wobei jede Spule direkt um einen Zahn und die Spulengruppe um benachbarte Zähne gewickelt ist,
wobei in den Nuten Wicklungsdrähte aus isolierten oder teilweise isolierten Litzenleitern, die verdrillt sind, mit quadratischem oder rechteckförmigem Querschnitt, wobei die Wicklungsdrähte isoliert sind, eingelegt sind,
wobei in einer Nut zwei Spulenseiten unterschiedlicher Spulen nebeneinander liegen und diese durch eine Zwischenisolierung getrennt sind.

2. Verfahren zur Herstellung einer hochpoligen elektrischen Maschine mit einer mehrphasigen Wicklung mit Frequenzen grösser 50 Hz mit Permanentmagneterregung,
beinhaltend folgende Schritte:
- einlegen von mehrphasigen Strangwicklungen in die zu bewickelnden Nuten, wobei die Wicklungen pro Spulengruppe, wie auch die gesamten Spulen eines Stranges, durchgängig geschleift werden,
- wickeln jeder Spule direkt um einen Zahn, wobei die Spulen einer Spulengruppe weiterführend um einen Nachbarzahn nach einer oder zwei Richtungen, weiter ohne Unterbrechung um benachbarte Zähne gewickelt werden, wobei die mehrphasigen Strangwicklungen aus isolierten Wicklungsdrähten, die aus isolierten oder teilweise isolierten Litzenleitern, die verdrillt sind, und einen quadratischen oder rechteckförmigen Querschnitt aufweisen, bestehen, und wobei zwei Spulenseiten unterschiedlicher Spulen in einer Nut durch eine Zwischenisolierung getrennt, die in die bereits halbgefüllte Nut eingelegt wird, nebeneinander angeordnet werden.

## Claims

1. High-pole electrical machine having a polyphase winding, permanent magnet excitation and frequencies higher than 50 Hz,
wherein the polyphase windings are inserted in the slots, which are looped continuously for each coil group,
wherein each coil is wound directly around one tooth and the coil group is wound around adjacent teeth,
wherein winding wires consisting of insulated or partly insulated twisted litz wires with a square or rectangular cross-section are inserted in the slots, with the winding wires being insulated,
wherein two coil sides of different coils are inserted next to each other and separated by an intermediate insulation layer.

2. Process for manufacturing a high-pole electrical machine having a polyphase winding, frequencies higher than 50 Hz and permanent magnet excitation,
comprising the following steps:
- Inserting polyphase phase windings in the slots with all the windings of each coil group and all the coils of a winding phase being looped continuously,
- Winding each coil directly around a tooth, with the coils of a coil group being continued around an adjacent tooth in one or two directions and further without an interruption around adjacent teeth, with the polyphase phase windings consisting of insulated winding wires, comprising insulated or partly insulated twisted litz wires and having a square or rectangular cross-section, and with the two coil ends of different coils being disposed next to each other, separated in a slot by an intermediate insulating layer, which is inserted in the slot that is already half-filled.

## Revendications

1. Machine électrique au nombre de pôles élevé, étant avec un enroulement polyphasé, avec excitation par aimants permanents et avec des fréquences supérieures à 50 Hz,
comportant des encoches à bobiner dans lesquelles sont disposées des enroulements polyphasées, bouclés de manière ininterrompue par groupe de bobines,
chaque bobine étant enroulée directement autour d'une dent et le groupe de bobines étant enroulés autour des dents voisines,
dans les encoches étant logés des fils d'enroulement constitués de fils conducteurs torsadés isolés ou partiellement isolés, formant une section carrée ou rectangulaire des fils d'enroulement, et ces fils d'enroulement étant isolés,
dans une encoche étant juxtaposées deux faces de bobines différentes, lesquelles sont séparées par une isolation intermédiaire.

2. Procédure de fabrication d'une machine électrique au nombre de pôles élevé, étant avec un enroulement polyphasé, avec des fréquences supérieures à 50 Hz, et avec excitation par aimants permanents
comprenant les étapes suivantes :
- placer des faisceaux d'enroulements polyphasés dans les encoches à bobiner, les enroulements par groupe de bobines aussi bien que l'ensemble des bobines d'un faisceau étant bouclés de manière ininterrompue,
- enrouler chaque bobine directement autour d'une dent, les bobines d'un groupe de bobines étant enroulées ensuite autour d'une dent voisine d'un ou de deux sens, et après, étant enroulées sans interruption autour des dents voisines, les faisceaux d'enroulements polyphasés étant constitués de fils d'enroulement isolés comportant des fils conducteurs torsadés isolés ou partiellement isolés, et étant de section carrée ou rectangulaire, et, deux faces de bobines différentes étant juxtaposées dans une encoche déjà à moitié remplie et séparées par une isolation intermédiaire.
